# EUROPEAN PATENT APPLICATION

(11) **EP 1 289 295 A1**
(43) Date of publication of application: **05.03.2003**
(21) Application number: 01306967.9
(22) Date of filing: 16.08.2001
(51) Int. Cl.: H04N 7/14

(54) **Audio-video communications and storage device**

(71) Applicant: Briggs, Alan, London E10 5QU (GB)
(72) Inventor: Briggs, Alan, London E10 5QU (GB)
(74) Representative: Pearce, Anthony Richmond

(57) **Abstract**

An audio-video communications and storage device has a camera (1) and a microphone (2), and a digital video encoder (6) which encodes data from the camera (1) and the microphone (2) into an appropriate digital format for subsequent transmission. A digital decoder (13) receives incoming encoded data and decode it into an appropriate format for audio and visual output. A pair of modems (8 and 10) transmit outgoing digital data and receive incoming digital data, respectively. A screen (16) and at least one speaker (18) are connected to the decoder (13). A message recorder (14) is provided for recording incoming data, and a recorder (4) is provided for transmitting pre-recorded outgoing data.

## Description

The present invention relates to an audio-video communications and storage device, more particularly a Video-Answerphone, which is designed specifically for connection into the internet for communication purposes.

It is an object of the present invention to provide a convenient form of an audio-video communications and storage device which lends itself to a wide variety of uses.

According to the present invention there is provided an audio-video communications and storage device comprising:-
(i) a camera and a microphone,
(ii) an encoder adapted to encode data from the camera and the microphone into an appropriate digital format for subsequent transmission,
(iii) a decoder adapted to receive incoming encoded data and decode it into an appropriate format for audio and visual output,
(iv) at least one modem or other communications device for transmitting outgoing digital data and receiving incoming digital data,
(v) a display and at least one speaker connected to the decoder,
(vi) means for recording incoming data and
(vii) means for transmitting pre-recorded data.

The means for transmitting pre-recorded data preferably includes an outgoing message recording and storage facility. The message storage facility preferably stores the message in digital form (eg. computer hard drive, writeable CD or floppy disk). The message stored may be a video message, an audio message or a combination of both.

There is no single video-format standard throughout the world (for example PAL is used in Germany and the UK, NTSC in the US and Secam in France). Thus, the audio-video communications and storage device preferably also comprises a data converter which recognises the video format of incoming data received by the modem or other data communications device and converts said data into the local format.

In one embodiment, two modems are provided. The first is adapted to receive incoming data and transfer it to the decoder in use, and the second is adapted to receive encoded data from the encoder and transmit it in use. Most preferably, each modem is a high speed modem (typically at least 8 Mb/s), such as one suitable for use in cable television. Alternatively, an ethernet data communications device may be employed. Other possibilities include terminal adapters, routers and token ring devices.

The device preferably includes a reader for a card or other removable information storage device (hereinafter simply called "card") and is configured so that it can only be operated when a valid card is inserted into the device. The card may take the form of a standard PCMCIA (Personal Computer Memory Card International Association) card which can be inserted into a standard PCMCIA slot in the device. For added security, the card can be loaded with personal details of the purchaser (e.g. name, address, telephone number and account reference) by the service provider (SP) from the contract document. The card is sent separately to the purchaser. When the card is inserted into the device, the details on the card are read by the device which creates a "Phone-number" (IP address) which is then sent to the SP. The SP then replies to confirm all the details against those already held on file from the contract document.

The device cannot be used without the card and may be arranged to switch off automatically upon removal of the card. The card will normally be arranged so that can only be used in one device. Thus, theft of the device itself is discouraged since it cannot be used except with the unique card. Also, loss or theft of the card does not enable it to be used in another device. If both the card and the device are stolen, then they cannot be used if the device is fitted with an additional security device asdescribed below.

If desired, the card may be arranged so as to enable a photograph of the user to be affixed thereto. The card itself may also comprise an ID card and/or a credit card. The card may also be capable of holding prepaid units to enable internet phone calls to be made and/or to enable "pay-per-view" services to be used.

If desired the device may be equipped with an additional security device such as reader for a thumbprint, fingerprint or other unique personal identification feature. When fitted, such additional security device can be enabled to allow only a single user to access the device. It may be configured so that it periodically requires the user for personal identification whilst it is in use. It is also preferred to have the facility that the additional security can be disabled at the request of the authorised user to enable others to access and use the device provided that the card is not removed.

The audio-video communications and storage device may be embodied in a computer (e.g. a laptop computer) which may be configured so that its default screen display has icons or the like enabling the user to access directly the various facilities available in the device.

An example of how this device may be used will now be described.

When using the device for the first time after the initial setting-up operation described above, a window appears on the screen telling the user to Click HERE for a new onscreen icon which contains new "Phone-number" (IP address) for the user to circulate.

When the box collapses into the icon, a new window appears which is the default "Start" window from then on. Within this window is a series of other, smaller windows, for:
1) making calls to ordinary phones (routed through MEDIARING, for example),
2) making calls to other similar audio-video communications and storage device (connected direct, and free), and
3) making video-calls to suitably equipped parties.

Calls can be made using a telephone handset forming part of the device. The handset itself may be connected with by wireless technology, e.g. by means of so-called BLUETOOTH technology.

If the user does not want to make a call, the window can be closed in the normal so as to access the standard desktop, but with some extra icons. One may be for a Banking/Pre-payment Service, another may be for a phone-book and address-book, a further one may be for a TV Guide, and yet another may be for an IP service and browser which may integrate with a standard search engine such as the COPERNICUS Search-Engine.

It is preferred for the device according to the present invention to be equipped with its own built-in ADSL (asymmetric digital subscriber line) switcher to facilitate the sending of data.

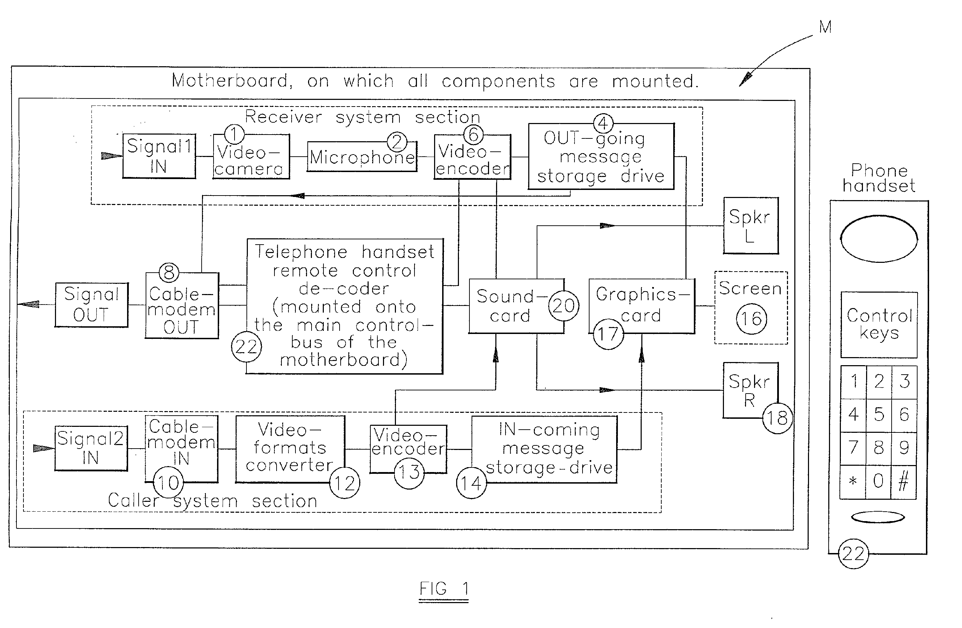

An embodiment of the present invention will now be described, by way of example only, with reference to the accompanying drawing which is a schematic representation of an audio-video communications and storage device or Video-Answerphone in accordance with the present invention.

Referring to the drawing, the Video-Answerphone comprises a camera 1, a microphone 2, an outgoing message disk recorder 4, a digital video encoder 6 and a first high speed modem 8 providing a high speed outgoing signal for sending via the internet. The camera 1 and microphone 2 are connected to the modem 8 via the encoder 6. The outgoing message recorder 4 is also connected to the encoder 6 and to the first modem 8.

The Video-Answerphone further comprises a second high speed modem 10 which receives incoming signals from a caller via the internet and which is connected to a video-formats converter 12. Alternatively, a single modem or another communications device or devices may be used for transmitting outgoing data and for receiving incoming data. The formats converter 12 is connected to a digital decoder 13. The decoder 13 is connected to an incoming message disk or tape recorder 14 and to a display screen 16 via a graphics card 17. Audio signals are taken from the decoder 13 and passed to speakers 18 via a sound card 20 which also receives audio signals from the encoder 6. The graphics card 17 also receives video signals from the recorder 4. A modified telephone handset unit 22 is also provided to enable the user to control the basic functions of the videophone. The telephone handset unit 22 is operably connected to the camera 1, the microphone 2, the message recorders 4 and 14 and the display screen 16 via a control-relay system on a main bus of a motherboard M.

The Video-Answerphone may be used to make outgoing calls and receive incoming calls in the presence or absence of a user.

To make an outgoing call, the user dials the required number on the handset 22 and connection is made via the internet. When the call is answered, the camera 1 and the microphone 2 are activated and the outputs from the camera 1 and the microphone 2 are encoded for transmission by the encoder 6 before being transmitted to the other party via the modem 8. Alternatively, the Video-Answerphone may be set to automatically activate the microphone 2 only, with activation of the camera 1 being controlled by the user (eg. the user may only want to activate the camera 1 after the intended recipient of the call has been identified).

To record an outgoing message, record mode is activated via the handset 22 so that outputs from the camera 1 and the microphone 2 are recorded on the outgoing message disk recorder 4. It will be noted that, although in the present embodiment various functions of the Video-Answerphone are controlled via the handset 22. In alternative embodiments, the handset 22 is omitted and the Video-Answerphone is controlled by a touch-sensitive screen, a keyboard or a voice activated system.

When an incoming call is received via the internet, data is transferred from the second modem 10 to the video-formats converter 12 where the video format of the incoming data is compared with the local format and converted if necessary. The data in the local format is then decoded by the decoder 13 and displayed on the screen 16. In this embodiment, the user activates the camera and the microphone 2 via the handset 22 once the identity of the caller is known. The microphone 2 may be activated independently of the camera 1 so that the Video-Answerphone can be operated as a standard telephone (for example as an additional security measure if the user is not completely satisfied with the identity of the caller).

When an incoming call is received in the absence of the user, the outgoing message disk recorder 4 is activated in playback mode and the data encoded for transmission via the modem 8. The incoming message disk recorder 14 is then activated in record mode and, if the caller leaves a message, this is recorded by the incoming message disk recorder 14 once the incoming data has been converted to the local format (if necessary) and decoded by the decoder 13. The recorded incoming message may be accessed at any time by the user via controls on the handset 22.

In this embodiment, the Video-Answerphone is a stand-alone unit. In other embodiments, the system may be computer based with the functions of the outgoing message recorder 4 and incoming message recorder 14 functions being effected by a hard disk, writeable CD or other storage media in the computer. The functions of the handset 22 may be effected by a standard computer keyboard and mouse. Video-Answerphone of the present invention may be incorporated into a portable computer such as a so-called laptop computer or any other readily portable computer such as a PDA.

Instead of communicating via a modem, the Video-Answerphone may communicate via an ethernet or other communications device such as a terminal adapter, a token ring device or a router.

The various parts of the above-described Video-Answerphone may be physically packaged in any convenient way in one or more housings.

## Claims

1. An audio-video communications and storage device comprising:-
(i) a camera and a microphone,
(ii) an encoder adapted to encode data from the camera and the microphone into an appropriate digital format for subsequent transmission,
(iii) a decoder adapted to receive incoming encoded data and decode it into an appropriate format for audio and visual output,
(iv) at least one communications device for transmitting outgoing digital data and receiving incoming digital data,
(v) a display and at least one speaker connected to the decoder,
(vi) means for recording incoming data and
(vii) means for transmitting pre-recorded data.

2. An audio-video communications and storage device as claimed in claim 1, wherein the means for transmitting pre-recorded data includes an outgoing message recording and storage facility.

3. An audio-video communications and storage device as claimed in claim 2, wherein the message storage facility is arranged to store the message in analogue form.

4. An audio-video communications and storage device as claimed in claim 2, wherein the message storage facility is arranged to store the message in digital form.

5. An audio-video communications and storage device as claimed in claim 2, 3 or 4, wherein the message storage facility is arranged to store a video message, an audio message or a combination of both.

6. An audio-video communications and storage device as claimed in any preceding claim, further comprising a video converter which recognises the video format of incoming data received by the communications device and converts said data into a local format.

7. An audio-video communications and storage device as claimed in claim 1, further comprising a removable card or other information storage element and a reader therefor.

8. An audio-video communications and storage device as claimed in claim 7, wherein the information storage element is arranged to be coded so that it can only be used with one audio-video communications and storage device.

9. An audio-video communications and storage device as claimed in any preceding claim, further comprising a reader for a personal identification feature such as a thumbprint or a fingerprint.

10. An audio-video communications and storage device as claimed in any preceding claim, further comprising an ADSL switcher.
